# EUROPEAN PATENT APPLICATION

(11) **EP 2 904 894 A1**
(43) Date of publication of application: **12.08.2015**
(21) Application number: 13843471.7
(22) Date of filing: 04.10.2013
(51) Int. Cl.: A01G 9/02, A01G 31/06

(54) **DOUBLE VERTICAL HANGING UNIT, IN THE FORM OF POUCHES, FOR HYDROPONIC PLANT CULTIVATION, PANEL OF DOUBLE VERTICAL HANGING UNITS, IN POUCH FORM, AND GREENHOUSE STRUCTURE**

(30) Priority: 05.10.2012 MX 2012011572
(71) Applicant: Martinez Ruanova, Luis Héctor Alberto, 14208 Delegación Tlalpan Distrito Federal (MX)
(72) Inventor: Martinez Ruanova, Luis Héctor Alberto, 14208 Delegación Tlalpan Distrito Federal (MX)
(74) Representative: Temino Ceniceros, Ignacio
(86) International application number: PCT/MX2013/000123
(87) International publication number: WO 2014/054936

(57) **Abstract**

The present invention relates to a modular panel and structure of a double vertical hanging unit, in the form of geotextile felt pouches, for hydroponic plant or vegetable cultivation, which comprises a vertical panel with a plurality of double vertical hanging units, in the form of geotextile felt pouches for hydroponic cultivation, a structure with a plastic cover and fixed zenithal ventilation for forming a greenhouse, and the system for the construction thereof. The object of the present invention is to provide a type of vertical panel and greenhouse that is totally different from those that currently exist on the market, by virtue of a novel, simple internal structure, the main feature of which combines the advantages of various of the vertical panels and greenhouses that exist on the market, but with a smaller number of components and with greater efficiency.

## Description

### FIELD OF THE INVENTION

The present invention relates to a double vertical hanging units, in the form of pouches, to the panel of double vertical hanging units in the form of pouches and a greenhouse structure forming by panels for hydroponic plant or vegetable cultivation, in vertical form, particularly hanging form and better appearance for house, office, small and close rooms, for greenhouse and field industry.

### BACKGROUND OF THE INVENTION

Usually, to hang up a pot on the side of a vertical wall, a bracket with three straps, a ring and a hook is used. Nowadays hydroponic cultivation systems of ornamental plants and vegetables are made horizontal or inclined manner on trays, tubes or ducts in which different cultivation means as hydroponics which a cultivation plants method is using: inert media such as perlite, gravel, rock wool, coconut fiber, and coconut shells where these are sown, and mineral nutrients solutions dissolved in water with no soil. The advantages are the reduction of water consumption due to being recycled and controlled the amount and type of nutrients that provide growth and high production of fruit, and disease, pests, pathogens control that are located in soil.

Application patent MX/a/2012/008531 refers to a panel with a plurality of vertical hanging units in the form of geotextile felt pouches. However said panel is not formed of a plurality of double vertical hanging units in the form of geotextile felt pouches without waterproof coating, increasing twice the density of plants in said panel due to sown on both sides and without a plastic cover structure with fixed roof ventilation forming a greenhouse, therefore the present invention is different from aforementioned document because it solves the problem of increasing productivity doubled, so the present invention is considered novel and inventive, not anticipated or suggested.

Utility model CN201781807 refers to a panel with two fabrics, non-woven absorbent and cotton with waterproof film, comprising multiple rows with slots forming bags containing plants which are sprayed through pipes with water. However said system has at least one waterproof geotextile felt in one side, has no hanging unit in the form of pouches to be installed or uninstalled, for maintenance, change or remove plants from a single row without affecting the rest of the plants in other rows of the vertical hanging unit, also has no irrigation system and water recovery, the form has no structural strength, making it impossible to place a panel above the other.

Patent GB2454678 refers to a hanging panel with at least two rows and multiple cells forming juxtaposed pouches between the two rows where the plants are located, panel is formed with two panels, a main panel of plastic sheet and a secondary panel of flexible sheet-shaped ripples and holes which formed pouches and joined between said panels, plants are sprayed through pipes. However, said system has at least one waterproof geotextile felt in one side, has no hanging unit in the form of pouches to be installed or uninstalled, for maintenance, change or remove plants from a single row without affecting the rest of the plants in other rows of the vertical hanging unit, also has no water recovery and the form has no structural strength, making it impossible to place a panel above the other.

Application US20120005958A1 refers to a plastic tube hanging panel with several rows forming bags where plants are located, joined by different parts with various perforations and plants are sprayed through pipes with water. However said system has at least one waterproof geotextile felt in one side, has no hanging unit in the form of pouches to be installed or uninstalled, for maintenance, change or remove plants from a single row without affecting the rest of the plants in other rows of the vertical hanging unit, also has no irrigation system and water recovery, the form has no structural strength, making it impossible to place a panel above the other.

Patent FR2902966 refers to a hanging panel with at least two rows with multiple cells forming juxtaposed pouches between the two rows where the plants are located; panel is formed with a wall forming a geotextile sheet and other where are joined cells or geotextile sheet pouches glued or sewed to the wall panel and each cell has a horizontal wall inside cells. However said system has at least one waterproof geotextile felt in one side, has no hanging unit in the form of pouches to be installed or uninstalled, for maintenance, change or remove plants from a single row without affecting the rest of the plants in other rows of the vertical hanging unit, also has no irrigation system and water recovery, the form has no structural strength, making it impossible to place a panel above the other.

Patent US20120066972 refers to a vertical hanging panel with a plurality of rows and slots forming pouches where the plants are located, panel is formed with a non-woven geotextile fabric inside a n-shaped frame with a bottom tank using cover and rollers. However said system has at least one waterproof geotextile felt in one side, has no hanging unit in the form of pouches to be installed or uninstalled, for maintenance, change or remove plants from a single row without affecting the rest of the plants in other rows of the vertical hanging unit and the form has no structural strength, making it impossible to place a panel above the other.

Generally solution given is a vertical panel integrated through several rows with pouches where plants are located; these panels are rigid or flexible so that its structure does not allow removing or changing any rows with pouches without affecting other, being a drawback.

### OBJECT OF THE INVENTION

The object of the present invention refers to a modular structure of double vertical hanging unit in the form of pouches for hydroponic plant or vegetation cultivation, comprising a vertical panel with a plurality of double vertical hanging units in the form of geotextile felt pouches, construction and cultivation process thereof.

A first object of the present invention is to increase the number of plants in a lower horizontal surface, placing a plurality of double vertical hanging units in the form of geotextile felt pouches, for vertical cultivation inside a vertical panel with frontal and rear views.

A second object of the present invention is to install or uninstall a double unit or a plurality of double vertical hanging units in the form of geotextile felt pouches of vertical panel.

A third object of the present invention is to change or remove plants from a single row without affecting the rest of the plants in other rows of the vertical panel.

A fourth object of the present invention is to supply water through a pipe from upper vertical panel that drains by gravity and capillary continuously through each double vertical hanging unit in the form of geotextile felt pouches overlapping each other and containing plants.

A fifth object of the present invention is to collect excess water irrigation through a water harvest duct at the bottom of vertical panel to be recycled through a hydraulic pump to reduce water consumption.

A sixth object of the present invention is to form a greenhouse containing a cover and passive ventilation induced by pressure differences due to entrance of cold air in the bottom of panel and hot air output through fixed roof ventilation at the top of greenhouse.

A seventh object of the present invention is to establish the hydroponic cultivation process in a greenhouse.

To achieve the above objects, the present invention provides:
A double vertical hanging unit in the form of geotextile felt pouches for plants or vegetation hydroponic cultivation. The unit comprises a loader bar inside a horizontal fold forming two high capillarity and water retention geotextile felt curtains, each curtain contains on one side a row with a plurality of pouches formed by a horizontal bottom fold of said curtain with a plurality of vertical equidistant seams between each other causing an opening on top whereby forming pouches which contain inert substrates where plants or vegetation are placed.

Vertical panel comprises two vertical posts with a plurality of folds to provide T-profile loaded structural strength with a plurality of double vertical hanging units in the form of geotextile felt pouches, placed horizontally at different levels, equidistant and overlapping each other. Two tightening straps diagonally positioned and fixed to the vertical posts with screw to avoid panel deformation. A L-inverted piping network with a plurality of drilling as droppers on horizontal pipe whereby drain by gravity and capillary water nutrient solution dissolved through pouches with inert substrates containing roots of plants. Water harvest duct has a hydraulic pump; said duct is fixed at their ends to the vertical posts to allow the flow of cold air below water harvest duct.

A greenhouse structure is formed by vertical tubular profile fixed to the vertical posts of panels and to diagonal and horizontal tubular profiles fixed to said vertical panel; vertical panel fixed the plastic cover to allow light to pass through and avoid rain water; an anti-aphids mesh for passive ventilation and induced by pressure differences due to entrance of cold air on bottom of panel and to the hot air vent through fixed roof ventilation on top of greenhouse.

### BRIEF DESCRIPTION OF DRAWINGS

To complete the description above and in order to aid a better understanding of the present invention, illustrative and non-limiting drawings and figures are added and, following the same reference signs to indicate the parts and figures shown is represented as follow:
FIG1. A front elevation view of vertical panel showing double vertical hanging units in the form of geotextile felt pouches, with bars and modular irrigation system.
FIG 1A. A cross-section view of vertical panel showing double vertical hanging units in the form of geotextile felt pouches, with bars and modular irrigation system.
FIG 1B. A front elevation view showing the structure of modular vertical panel.
FIG 1C. A front elevation plan view showing the structure of modular vertical panel.
FIG 2. A perspective view of double vertical hanging unit in the form of geotextile felt pouches for hydroponic plant cultivation.
FIG 2A. A cross-section view of double vertical hanging unit in the form of geotextile felt pouches showing loader bar and two curtains.
FIG 3. A front elevation view of greenhouse structure, positioned above of panels with vertical, diagonal and horizontal tubular profile.
FIG 3A. A front elevation plan view of greenhouse structure, positioned above of panels with vertical, diagonal and horizontal tubular profile.
FIG 3B. A perspective view of greenhouse structure, positioned above of panels with vertical, diagonal and horizontal tubular profile.
FIG 4. A perspective view of three tubular profiles joint, a said vertical with two said horizontal of greenhouse structure.
FIG 4A. A perspective view of two horizontal tubular profiles joint of greenhouse structure.
FIG 4B. A perspective view of two dipsticks with horizontal tubular profile joint, of greenhouse structure.
FIG 4C. A perspective of two telescope vertical tubular profiles joint, of greenhouse structure.
FIG 4D. A cross-section view of plastic cover with horizontal dipstick joint, of greenhouse structure.

The following reference numbers are used to indicate the parts and environment of the invention on the drawings:

### Vertical post

- 1'.: Vertical post with a plurality of folds
- 2.: Tightening straps
- 3.: Pouches
- 4.: Loader bar
- 5.: Double vertical hanging units in the form of geotextile felt pouches
- 7.: Horizontal fold on top
- 7'.: Horizontal fold on bottom
- 8.: Seam
- 9.: Overlap
- 10.: Inert substrates
- 11.: Vertical pipe
- 12.: Horizontal pipe with a plurality of equidistant drilling each other
- 13.: Water harvest duct
- 14.: Hydraulic pump
- 15.: Vertical tubular profile
- 16.: Diagonal tubular profile
- 17.: Horizontal tubular profile
- 18.: Plastic cover
- 19.: anti-aphids mesh
- 20.: Fixed roof ventilation
- 21.: Drilling
- 22.: Plug
- 23.: screw
- 24.: hose
- 25.: vertical post shoe
- 26.: vertical post connector
- 27.: dipstick
- 28.: Tubular telescope
- 29.: pluvial water harvest duct
- 30.: Tutoring support
- 31.: cold air flow
- 32.: hot air flow

### DESCRIPCIÓN DETALLADA DE LA INVENCIÓN

The present invention refers to a modular structure formed by a double vertical hanging unit in the form of pouches for plants or vegetation hydroponic cultivation, comprising a vertical panel with a plurality of double vertical hanging units as geotextile felt pouches for hydroponic cultivation, construction and cultivation process thereof.

### Reference to said figures:

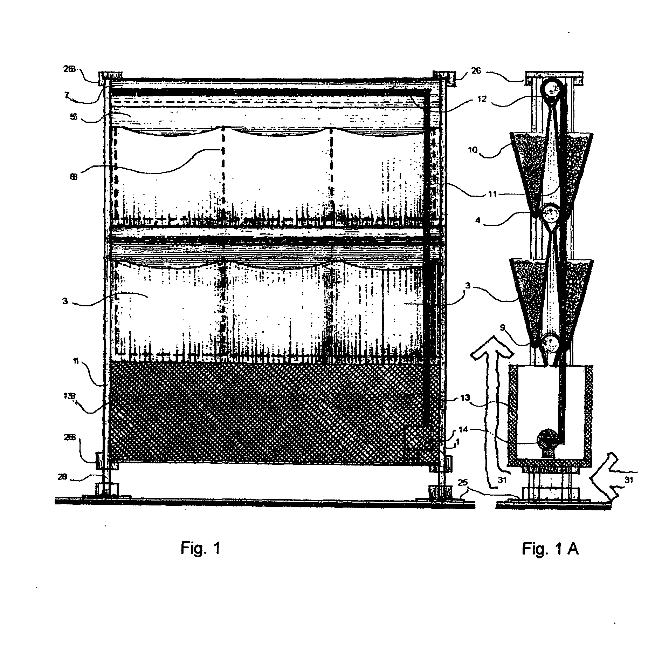

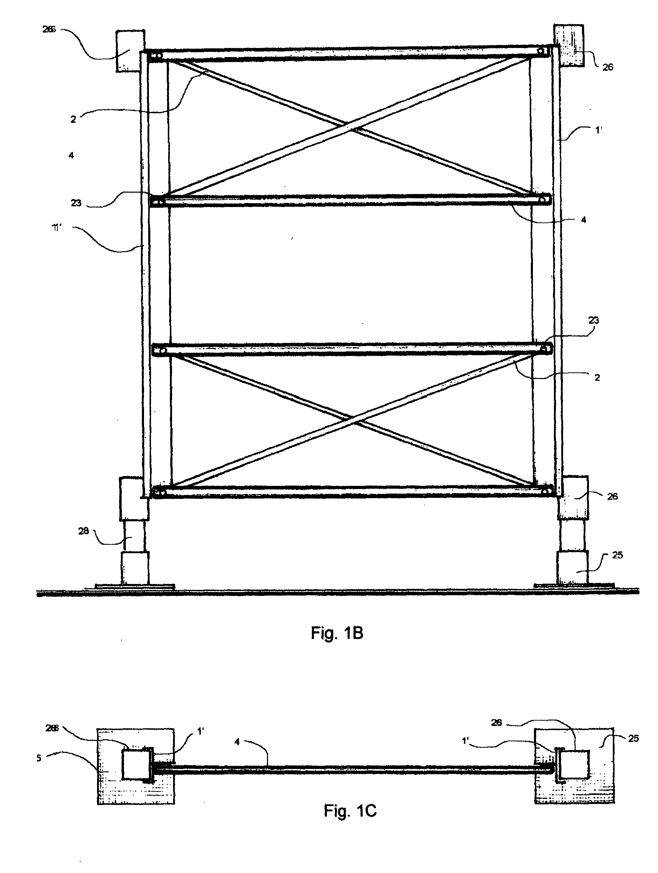

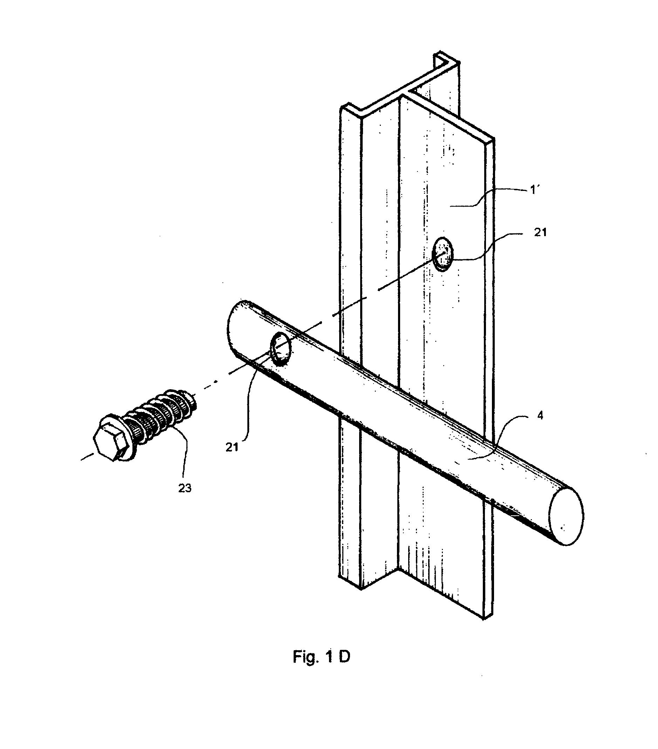

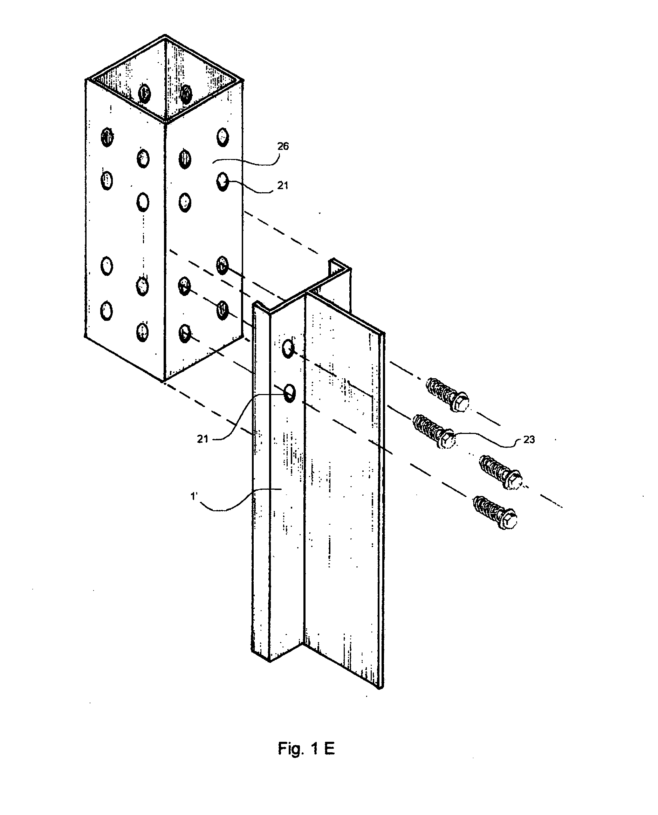

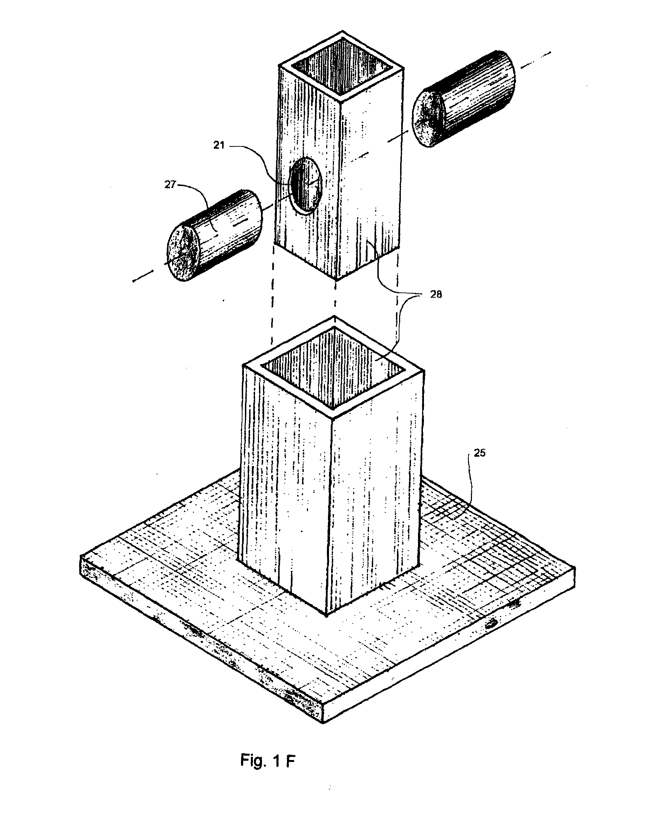

FIG 1 and 1A schematically show the elements forming the present invention of vertical panel, which comprises two vertical posts (1') with a plurality of folds to provide T-profile loaded structural strength, two tightening straps (2) diagonally positioned and fixed to the vertical posts (1') with screw (23) to avoid panel deformation, two posts (1') with a plurality of double vertical hanging units in the form of geotextile felt pouches (5) for plants or vegetation cultivation, which can be installed or uninstalled through the bars (4) joined by screws (23) to said posts (1'), said double vertical hanging units manufactured by geotextile felt, a L-inverted piping network comprising a vertical pipe (11) and equidistant-perforations horizontal pipe (12) as droppers, whereby drain by gravity and capillary water nutrient solution dissolved through double vertical hanging units in the form of geotextile felt pouches (5) overlapping (9) each other with inert substrates (10) containing roots of plants; a water harvest duct (13) to collect excess water irrigation and to reduce water consumption; a hydraulic pump (14) located inside or outside the water harvest duct (13) to recycle excess irrigation water collected from excess water irrigation, and allow the flow of cold air (31) below water harvest duct (13).
FIG 1B and 1C show the elements of the present invention of vertical panel, which comprises two vertical posts (1') with a plurality of folds to provide T-profile loaded structural strength, two tightening straps (2) diagonally positioned and fixed with screws (23) to the vertical posts (1') to avoid panel deformation.
FIG 1D shows setting of loader bar (4) with screws (23) to the vertical post (1').
FIG 1E shows setting of the post connector (26) with screws (23) to the vertical post (1').
FIG 1F shows setting of the shoe post with the tubular telescope (28) and drilling (21) to provide height adjustment with the dipstick (27).

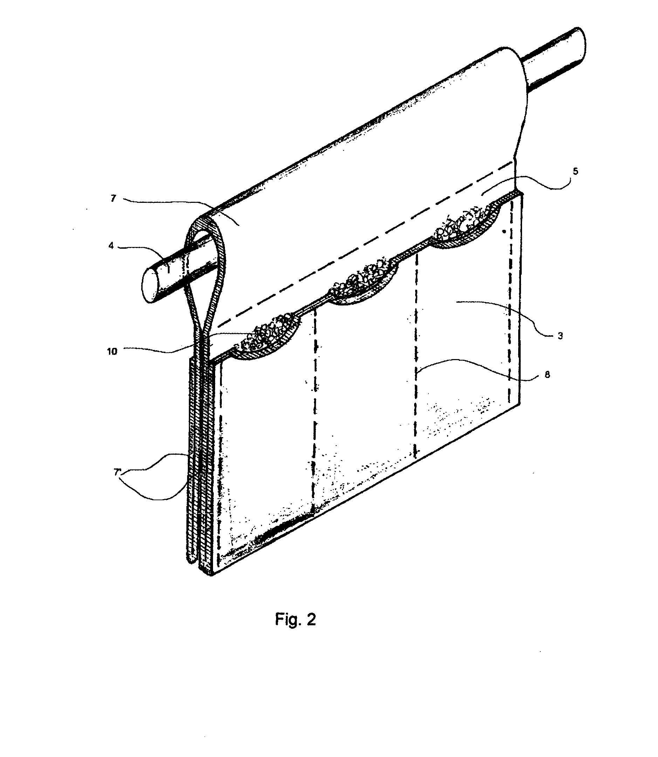

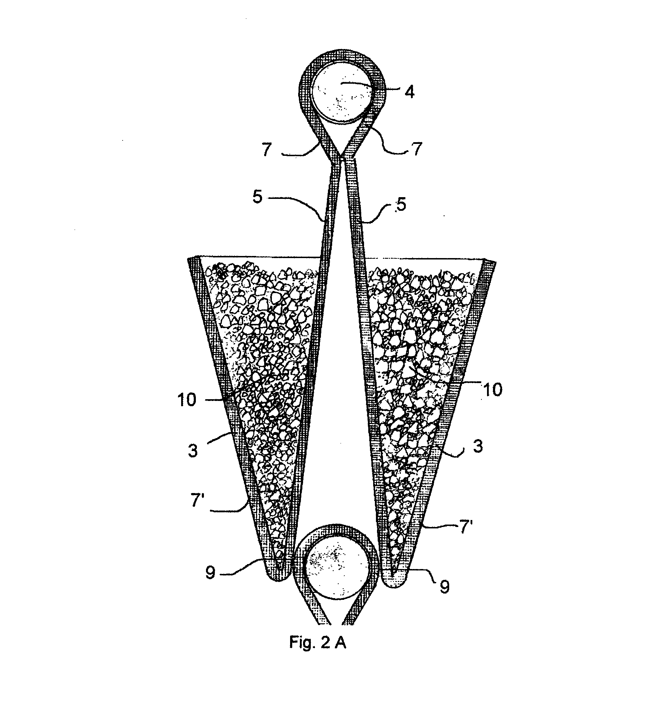

FIGS 2 and 2A show the elements of the present invention of a double vertical hanging unit in the form of geotextile felt pouches, comprising a loaded bar (4) inside a horizontal fold (7) on top forming two high capillarity geotextile felt curtains whereby drain by gravity and capillary water nutrient solution dissolved, each curtain contains on one side a row with a plurality of pouches (3) formed by a horizontal bottom fold (7') of said curtain with a plurality of vertical equidistant seams (8) between each other causing an opening on top whereby forming pouches (3) which contain inert substrates (10) where plants or vegetation are placed. On upper side has a horizontal fold for the loader bar; bottom side forming two curtains, each curtain has a horizontal fold and a row with a plurality of pouches formed with a plurality of vertical equidistant seams between each other causing an opening on top whereby forming pouches, so that the curtains are opposite each other and the plurality of pouches formed outside.

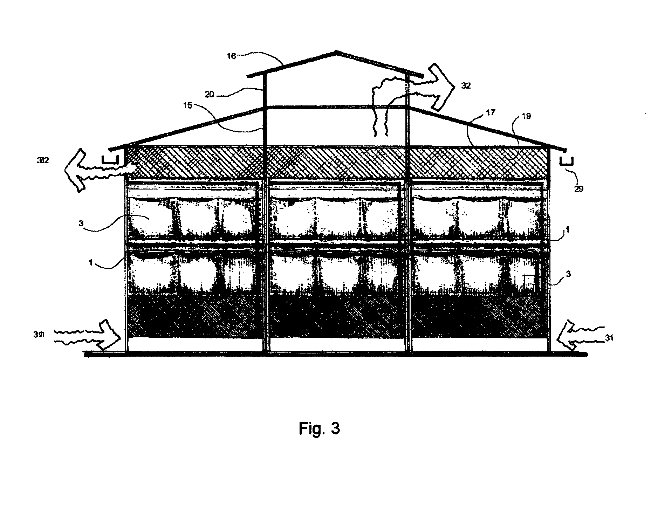

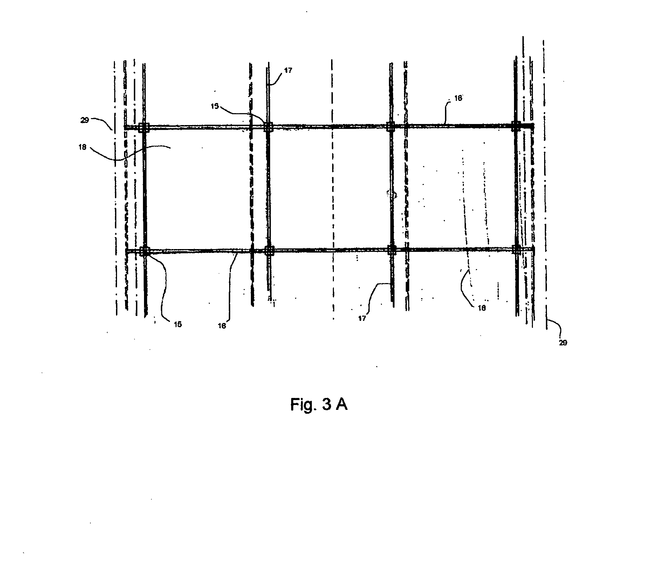

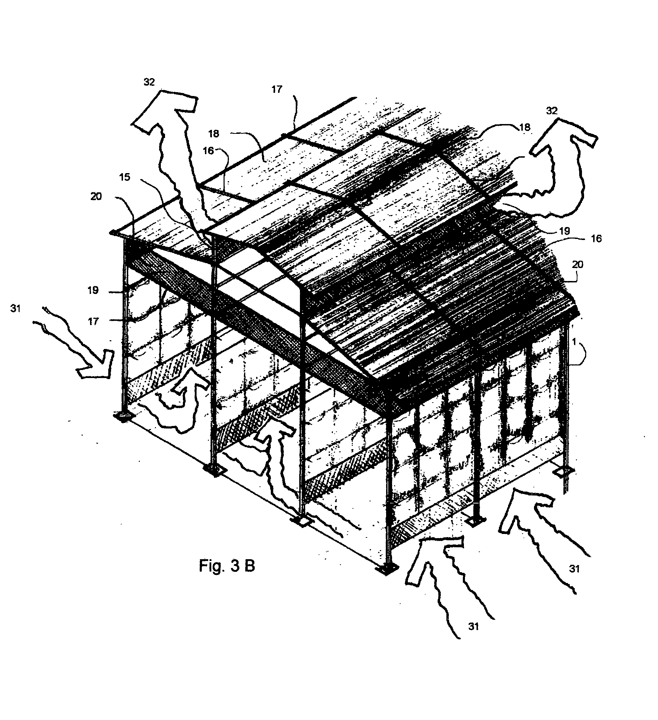

FIGS 3, 3A and 3B show the elements of the present invention of a greenhouse structure placed above vertical panels, formed by vertical tubular profiles (15) fixed with screws to vertical posts (1') of panels; diagonal tubular profiles (16) and horizontal (17) fixed with screws to said vertical profiles (15) to hold plastic cover (18) allowing sunlight to pass through and avoid rainwater to pass through using anti-aphids mesh (19) for passive ventilation induced by pressure differences due to entrance of cold air (31) in the bottom of panel and hot air output (32) through fixed roof ventilation (20) at the top of greenhouse and rainwater harvest duct (29).

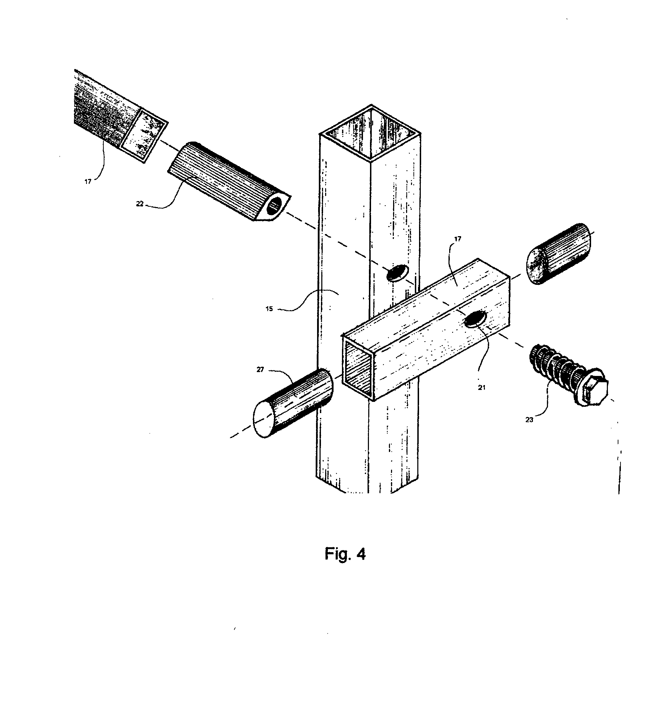

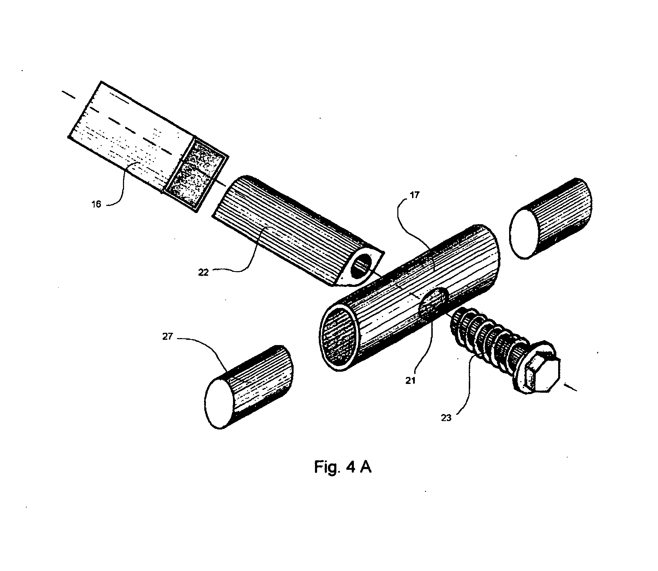

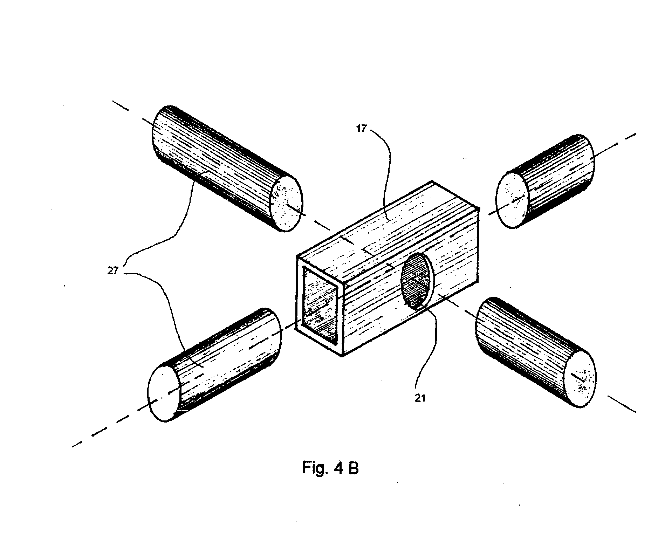

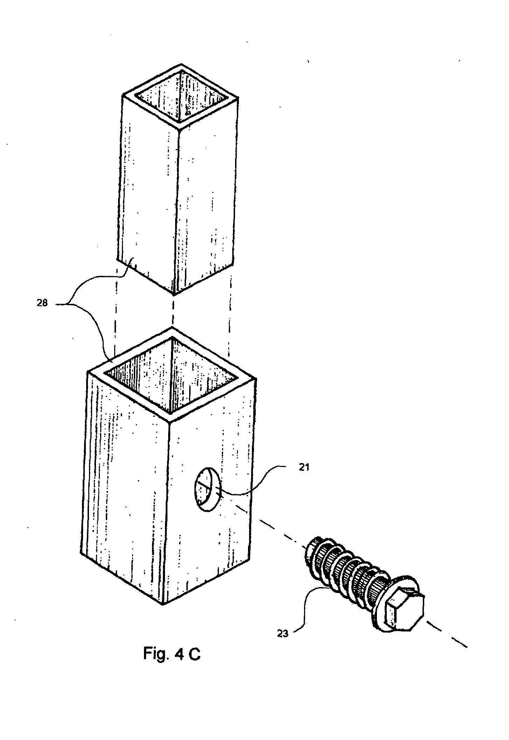

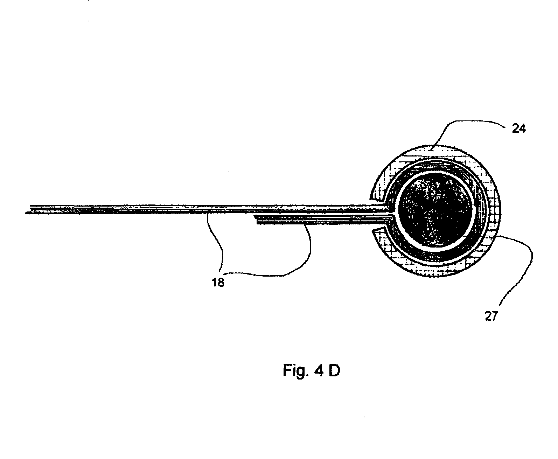

FIGS 4, 4A, 4B, 4C and 4D show the elements of construction system ofgreenhouse structure is formed by vertical tubular profiles (15) in the form of tubular telescope (28) fixed with screws (23) to the vertical posts connectors (26) of panels and to diagonal tubular profiles (16) and horizontal tubular profiles (17) drilling (21) fixed with screws (23) to said vertical profiles (15); horizontal tubular profiles (17) and diagonal tubular profiles (16) joint, with plugs (22) and drillings (21) fixed with screws (23). The plastic cover (18) fixed to a dipstick (27) and a hose (24), allowing sunlight to pass and avoid rainwater; an anti-aphids mesh (19) for fixed roof ventilation (20) fixed by a dipstick (27) and a hose (24).

The construction system of a double vertical hanging unit in the form of pouches for plants or vegetation hydroponic cultivation, as well as modular vertical panel for hydroponic plant cultivation and structure cover and fixed roof ventilation for greenhouse, may be manufactured in appropriate dimensions modules so that a person can manipulate and build in different materials such as: aluminum, brass, copper, steel, iron, nickel, chromium, tin, tungsten or alloys of these metals; thermosets; thermoplastic and reinforced plastics; natural solid woods, veneer and bonded wood, natural or plastic textile fibers of any texture and color.

Efficiency in said construction system of modular vertical panel for said plants-vegetation hydroponic cultivation requires less ground surface to provide a higher cultivation plants density per m². At higher height of panel, it increases the density of plants.

The design and function of double vertical hanging unit in the form of geotextile felt pouches for plants-vegetation hydroponic cultivation, the construction system of the vertical modular panel for plant hydroponic cultivation, the structure cover and fixed roof ventilation for greenhouse, as the cultivation process thereof contain the novelty of the system resulting in:
- Maximum use of space because it can be grown at different levels.
- Let remove and replace a vertical hanging unit in the form of geotextile felt pouches for plant hydroponic cultivation without affecting the other double vertical hanging units in the form of geotextile felt pouches of vertical panel.
- System can be automated easily.
- Allows plant, harvest and rotate crops faster.
- Requires less water for irrigation.
- Facilitates cleaning, harvest and irrigation system.
- Reduces carbon emission.

Other features of this vertical modular panel for plant hydroponic cultivation:
- It requires no walls where the panels are supported when more than two panels are placed, being positions as back, sides, at right angles, parallel or above them, since the vertical posts of said panels used to form the structure of wall, orchard or greenhouse.
- It is 100% buildable, portable, removable and recoverable.

For the above described states that the features of this modular vertical panel with double vertical hanging units, cover structure and fixed roof ventilation for greenhouse, double vertical hanging unit in the form of geotextile felt pouches for plant hydroponic cultivation is not found in the state of the art, by any other appliance and gather together the reduction conditions of: physical space, material costs, labor costs, setting time, carbon emissions. Efficiency is achieved in: to increase the density and the production of organic agriculture and greater quality control.

### PREFERED EMBODIMENT OF THE INVENTION

The preferred embodiment of a double vertical hanging unit in the form of geotextile felt pouches for plant hydroponic cultivation (FIG 2 and 2A) comprising a loader bar inside a horizontal fold on top of the hanging unit to provide two curtains with high capillarity and retention-water geotextile felt. Each curtain contains on one side a row containing a plurality of pouches formed by a horizontal bottom fold of each curtain with a plurality of vertical equidistant seams between each other causing an opening on top whereby pouches are formed which contain substrates where plants or vegetation are placed.

In another preferred embodiment of the present invention, double vertical hanging unit in the form of geotextile felt pouches for plant hydroponic cultivation, also could put individually or with a plurality of vertical hanging units in the form of geotextile felt bags, through brakets to the wall, FIG not shown.

In another preferred embodiment of the present invention, double vertical hanging unit in the form of geotextile felt pouches for plant hydroponic cultivation, also may be placed individually or with a plurality of vertical hanging units in the form of geotextile felt pouches, through suspenders to a horizontal surface, FIG not shown.

In another preferred embodiment of the present invention, a double vertical hanging unit in the form of geotextile felt pouches for plant hydroponic cultivation, also may be placed individually or with a plurality of vertical hanging units in the form of geotextile felt pouches, through parallel bars between two walls, FIG not shown.

Another preferred embodiment of the present invention, vertical panel shown FIG 1, 1A, 1B and 1C is formed by two vertical posts with a plurality of folds to provide T-profile loaded structural strength, with a plurality of double vertical hanging units in the form of geotextile felt pouches for plant-vegetation hydroponic cultivation, placed in horizontal form at different levels, equidistant and overlapping each other. Two tightening straps diagonal positioned and fixed to the vertical posts to prevent panel deformation. A L-inverted pipe network with a plurality equidistant drillings as droppers on horizontal pipe, whereby drain by gravity and capillary nutrient solution dissolved water through double vertical hanging units in the form of geotextile felt pouches overlapping each other with inert substrates containing roots of plants, until to reach the lower water harvest duct which is fixed at its ends to the vertical posts and the water harvest duct accumulates and rises by the hydraulic pump through the vertical pipe to horizontal pipe with equidistant-shaped droppers, wherein the irrigation cycle is closed.

Another preferred embodiment of the present invention, in vertical panel can be installed or uninstalled a plurality of double vertical hanging units in the form of geotextile felt pouches with without affecting other installed rows.

Another preferred embodiment of the present invention, vertical panel can be placed a plurality of vertical panels joint laterally at their posts linearly which gives the possibility to connect horizontal pipe linearly as well as the water harvest duct is connected linearly causing the use of only one vertical pipe and one hydraulic pump for the irrigation system.

Another preferred embodiment of the present invention, vertical panel can be placed with a plurality of vertical panels joint longitudinally at their posts linearly top of each other giving the possibility to connect the vertical pipe linearly causing the use of only one vertical pipe and one water harvest duct and one hydraulic pump for the irrigation system.

Another preferred embodiment of the present invention, vertical panel is formed by two vertical posts with a plurality of folds to provide T-profile loaded structural strength with a plurality of double vertical hanging units in the form of geotextile felt pouches for hydroponic cultivation collocated horizontally at different levels, equidistant and overlapping each other. Two tightening straps diagonal positioned and fixed to the vertical posts to avoid panel deformation. A L-inverted pipe with a plurality of drillings as droppers in horizontal pipe located on top of said panel whereby drain by gravity and capillary nutrient solution dissolved water through double vertical hanging unit in the form of geotextile felt pouches overlapping each other with inert substrates containing roots of plants.

Another preferred embodiment of the present invention, vertical panel for plant hydroponic cultivation could be placed mixing at least two panels without relying on any wall or vertical member that support said panels as due to the way it is built posts give support and structural strength required to be stable in combination of two panels at least arranged in a squad.

Another preferred embodiment of the present invention, vertical panel for plant hydroponic cultivation could be placed a plurality of panels without relying on any wall or vertical element that support such panels such placement in different positions generate orchards or greenhouses resulting in greater control and resource efficiency in hydroponic cultivation.

Another preferred embodiment of the present invention, FIGS 3, 3a, and 3B of vertical panel for plant hydroponic cultivation could be placed a structure of tubular profiles with plastic cover for passive ventilation induced by pressure differences due to entrance of cold air in the bottom of panel and hot air output through fixed roof ventilation at the top of greenhouse. Posts give panel support and structural strength required.

Another preferred embodiment of the present invention, vertical panel for plant hydroponic cultivation, due to its construction process is easily transportable, buildable, mountable, removable, collapsible and reusable 100% without triggering any waste as well as the composition of their materials that are fully recyclable supporting the environment and reducing carbon emissions.

Another preferred embodiment of the present invention, vertical modular panel for plant hydroponic cultivation comprises:
a) A support structure formed by two vertical support posts having a plurality of folds; two tightening straps fixed to the vertical posts and its holes for fixing the horizontal bars to the location of double vertical hanging units fixed to the vertical posts;
b) Double vertical hanging units in the form of geotextile felt pouches, placed on the horizontal bars that are fixed to the vertical posts which can be installed or uninstalled easily by rows;
c) A L-inverted piping network, a water harvest duct and a hydraulic pump;
d) A structure with tubular profiles with plastic cover and fixed roof ventilation forming a greenhouse because posts give panel support and structural strength required.

### EXAMPLES

### Example 1

A support structure, hanging units and the structure with tubular profiles for plant hydroponic cultivation had manufactured by known methods as follows:
a) A support structure formed by two vertical support posts having a plurality of folds; two tightening straps fixed to the vertical posts and its holes for fixing the horizontal bars to the location of double vertical hanging units fixed to the vertical posts;
b) Double vertical hanging units in the form of geotextile felt pouches, placed on the horizontal bars that are fixed to the vertical posts which can be installed or uninstalled easily by rows;
c) A L-inverted piping network, a water harvest duct and a hydraulic pump and;
d) A structure with tubular profiles with plastic cover and passive ventilation induced by pressure differences due to entrance of cold air in the bottom of panel and hot air output through fixed roof ventilation at the top of greenhouse. Posts give panel support and structural strength required.

### Example 2

A support structure with hanging units for plant hydroponic cultivation had manufactured by known methods as follows:
a) A support structure formed by two vertical support posts having a plurality of folds; two tightening straps fixed to the vertical posts and its holes for fixing the horizontal bars to the location of double vertical hanging units fixed to the vertical posts;
b) Double vertical hanging units in the form of geotextile felt pouches, placed on the horizontal bars that are fixed to the vertical posts which can be installed or uninstalled easily by rows;
c) A L-inverted piping network, a water harvest duct and a hydraulic pump.

### Example 3

A support structure with hanging units for mushroom cultivation had manufactured by known methods as follows:
a) A support structure formed by two vertical support posts having a plurality of folds; two tightening straps fixed to the vertical posts and its holes for fixing the horizontal bars to the location of double vertical hanging units fixed to the vertical posts;
b) Double vertical hanging units in the form of geotextile felt pouches, placed on the horizontal bars that are fixed to the vertical posts which can be installed or uninstalled easily by rows;
c) A L-inverted piping network, a water harvest duct and a hydraulic pump and;
d) A structure with tubular profiles with plastic cover (dark) and passive ventilation induced by pressure differences due to entrance of cold air in the bottom of panel and hot air output through fixed roof ventilation at the top of greenhouse. Due panel structure, posts give panel support and structural strength required, keeping complete darkness and controlling temperature and moisture.

### Example 4

A greenhouse structure for plant and vegetable cultivation had manufactured by known methods as follows:
a) Vertical panels of double vertical hanging units;
b) Vertical tubular profiles placed above panels of double vertical hanging units fixed with screws to posts;
c) Diagonal tubular profiles and horizontal fixed with screws to said vertical profiles to hold plastic cover;
d) A plastic cover allowing sunlight to pass through;
e) An anti-aphids mesh for passive ventilation induced by pressure differences due to entrance of cold air in the bottom of panel and hot air output through fixed roof ventilation at the top of greenhouse.

Also has a bar on top of the panels of double vertical hanging units to hang tutors for plants, rainwater harvest duct and structure of said duct (structural design) allows assembly an non-assembly easily.

## Claims

1. A panel of double vertical hanging units in the form of pouches for plant hydroponic cultivation, the panel comprising:
a) A support structure formed by two vertical support posts having a plurality of folds; two tightening straps fixed to the vertical posts and its holes for fixing the horizontal bars to the location of hanging units fixed to the vertical posts;
b) Double vertical hanging units in the form of geotextile felt pouches, placed on the horizontal bars that are fixed to the vertical posts which can be installed or uninstalled easily by rows;
c) A L-inverted piping network, a water harvest duct and a hydraulic pump and;
d) A structure with plastic cover and passive ventilation induced by pressure differences due to entrance of cold air in the bottom of panel and hot air output through fixed roof ventilation at the top of greenhouse to form a greenhouse due to panel structure, posts give panel support and structural strength required.

2. The panel of units according to claim 1, wherein said double vertical hanging units further comprising:
a) A horizontal loader bar inside a horizontal fold on top of double hanging unit and;
b) A horizontal fold on top for loader bar; on bottom forming two curtains, each curtain contains a horizontal fold containing a row with a plurality of pouches formed with a plurality of vertical equidistant seams between each other causing an opening on top whereby forming pouches.

3. The panel of double vertical hanging units in the form of geotextile felt pouches for plant hydroponic cultivation according to claim 1, wherein L-inverted pipe network comprising vertical pipe and horizontal pipe with a plurality equidistant drillings as droppers in said horizontal pipe.

4. The panel of double vertical hanging units in the form of geotextile felt pouches for plant hydroponic cultivation according to claim 1, wherein vertical panel can be placed a plurality of vertical panels joint laterally at their posts linearly which gives the possibility to connect horizontal pipe linearly as well as the water harvest duct is connected linearly causing the use of only one vertical pipe and one hydraulic pump for the irrigation system.

5. The panel of double vertical hanging units in the form of geotextile felt pouches for plant hydroponic cultivation according to claim 1, wherein vertical panel can be placed a plurality of vertical panels joint vertically at their posts linearly which gives the possibility to connect only one vertical pipe linearly as well as the water harvest duct and only one hydraulic pump.

6. The panel of double vertical hanging units in the form of geotextile felt pouches for plant hydroponic cultivation according to claim 1, wherein vertical panel can be placed a plurality of panels without relying on any wall or vertical member that support said panels as due to the way it is built posts give support and structural strength required to be stable in a squad.

7. The panel of double vertical hanging units in the form of geotextile felt pouches for plant hydroponic cultivation according to claim 1, wherein vertical panel due to the way it is built posts give support and structural strength required to be stable vertically and said setting in different positions to form orchard or greenhouses.

8. The panel of double vertical hanging units in the form of geotextile felt pouches for plant hydroponic cultivation according to claim 1, wherein vertical panel due to the way it is built posts give support and structural strength required to be placed a structure with plastic cover and passive ventilation induced by pressure differences due to entrance of cold air in the bottom of panel and hot air output through fixed roof ventilation at the top of greenhouse to form a greenhouse.

9. The panel of double vertical hanging units in the form of geotextile felt pouches for plant hydroponic cultivation according to claim 1, wherein vertical panel comprising two vertical posts to provide angle, harvest, sill or T-profile and laminate, tubular or solid section.

10. The panel of double vertical hanging units in the form of geotextile felt pouches for plant hydroponic cultivation according to claim 1, wherein vertical panel due to its construction process is easily transportable, buildable, mountable, removable, collapsible and reusable 100% with 0% triggering any waste as well as the composition of their materials that are fully recyclable supporting the environment and reducing carbon emissions.

11. The panel of double vertical hanging units in the form of geotextile felt pouches for plant hydroponic cultivation according to claim 1, wherein hydraulic pump can be placed inside or outside water harvest duct.

12. A double vertical hanging unit in the form of geotextile felt pouches for plant hydroponic cultivation wherein said double vertical hanging units comprising:
a) A horizontal loader bar inside a horizontal fold on top of double hanging unit and;
b) A horizontal fold on top for loader bar; on bottom forming two curtains, each curtain contains a horizontal fold containing a row with a plurality of pouches formed with a plurality of vertical equidistant seams between each other causing an opening on top whereby forming pouches.

13. The double vertical hanging unit in the form of geotextile felt pouches for plant hydroponic cultivation according to claim 12, wherein double vertical hanging units in the form of geotextile felt pouches can be installed or uninstalled by rows.

14. The double vertical hanging unit in the form of geotextile felt pouches for plant hydroponic cultivation according to claim 12, wherein double vertical hanging units in the form of geotextile felt pouches can be placed individually or a plurality of them in the panel or by bracket, tightening straps or bars to a wall or ceiling.

15. The double vertical hanging unit in the form of geotextile felt pouches for plant hydroponic cultivation according to claim 12, wherein each curtain is geotextile felt and contains a row with a plurality of pouches formed with a plurality of vertical equidistant seams between each other and said joints can be sewed, glued, stapled or riveted.

16. A greenhouse for plant cultivation for vertical panels of double vertical hanging units, wherein said greenhouse comprising:
a) Vertical panels of double vertical hanging units;
b) Vertical tubular profiles placed above panels of double vertical hanging units fixed with screws to posts;
c) Diagonal tubular profiles and horizontal fixed with screws to said vertical profiles to hold plastic cover;
d) A plastic cover allowing sunlight to pass through;
e) An anti-aphids mesh for passive ventilation induced by pressure differences due to entrance of cold air in the bottom of panel and hot air output through fixed roof ventilation at the top of greenhouse.

17. The greenhouse for plant cultivation for vertical panels of double vertical hanging units, according to claim 16, wherein said greenhouse comprising a bar on top of panels of double vertical hanging units to hang tutors for plants.

18. The greenhouse for plant cultivation for vertical panels of double vertical hanging units, according to claim 16, wherein said greenhouse further comprising rainwater harvest ducts.

19. The greenhouse for plant cultivation for vertical panels of double vertical hanging units, according to claim 16, wherein said construction system allows assembly a non-assembly easily.

20. The greenhouse for plant cultivation for vertical panels of double vertical hanging units, according to claim 16, wherein said greenhouse structure comprising vertical tubular profiles (15) in the form of tubular telescope (28) fixed with screws (23) to the vertical posts connectors (26) of panels and to diagonal tubular profiles (16) and horizontal tubular profiles (17) drillings (21) fixed with screws (23) to said vertical profiles (15); horizontal tubular profiles (17) and diagonal tubular profiles (16) joint, with plugs (22) and drillings (21) fixed with screws (23); the plastic cover (18) fixed to a dipstick (27) and a hose (24), allowing sunlight to pass and avoid rainwater; an anti-aphids mesh (19) for fixed roof ventilation (20) fixed by a dipstick (27) and a hose (24).
